# EUROPEAN PATENT APPLICATION

(11) **EP 2 103 396 A1**
(43) Date of publication of application: **23.09.2009**
(21) Application number: 08703383.3
(22) Date of filing: 17.01.2008
(51) Int. Cl.: B25F 5/00

(54) **MACHINE TOOL HAVING BRUSHLESS MOTOR**

(30) Priority: 18.01.2007 JP 2007009101
(71) Applicant: Max Co., Ltd., Chuo-ku Tokyo 103-8502 (JP)
(72) Inventor: SAKAMAKI, Kazuya, Tokyo 103-8502 (JP); TERANISHI, Akira, Tokyo 103-8502 (JP); ARAI, Kenichi, Tokyo 103-8502 (JP)
(74) Representative: Samson & Partner
(86) International application number: PCT/JP2008/050528
(87) International publication number: WO 2008/088017

(57) **Abstract**

In a first space S1 formed upwardly of a brushless motor, there is arranged a power substrate 3 including an electronic part for controlling a rotation of the brushless motor, and, in a second space S2 formed backwardly of the brushless motor, there is arranged a heat sink for cooling the power substrate 3.

## Description

### Technical Field:

The present invention relates to a power tool with a brushless motor and, specifically, the invention relates to a power tool which uses efficiently a structural characteristic of a power tool with a brushless motor carried thereon.

### Background Art:

Most of motors for use in a power tool are of a type which is driven from a DC supply and, as an example of this type of motors, there is known a brushless motor which does not use a brush or a commutator. The brushless motor, instead of using a brush or a commutator, includes a power substrate and a control substrate which are respectively used to control a rotation of the brushless motor. On the power substrate, there is mounted an FET or the like which is an electronic part for controlling the rotation of the brushless motor.

However, rotation controlling electronic parts are easy to generate heat, when the motor is driven. Thus, when the driving of the motor is kept ON, the electronic parts are overheated and broken, thereby causing a functional damage of the motor such as the breakdown of the motor and the reduced efficiency of the output thereof, with the result that an operation of the power tool is hindered and thus a reliability of the power tool is impaired.

Therefore, in the power tool using a brushless motor, there must be taken measures to prevent the power substrate for controlling the rotation of the brushless motor from being overheated and thus being reduced in the control function thereof, that is, to prevent the power substrate from having ill influences on the brushless motor. Conventionally, in order to prevent the power substrate from being overheated, for example, there has been well known a measure in which the power substrate is disposed backwardly of a motor shaft serving as a passage for the cooling air of a cooling fan for motor windings, or in the rear portion of the motor, and the heat releasing performance of the power substrate is enhanced using the flow of the cooling air to thereby restrict an increase in the temperature of the power substrate and thus avoid the above-mentioned ill influences of the power substrate on the motor (for example, see the patent reference 1, 2).
Patent Reference 1: JP-A-2003-199310
Patent Reference 2: JP-A-2004-007869

The power tool is used in various fields and, for example, it is often used at a construction site or the like. At the construction site, the power tool is used even under the floor, on the attic and the like which are narrow and hard to operate the power tool. In order to enhance the operation efficiency of the power tool in such narrow operation sites, the power tool is required to be easy to use; and, for this purpose, an increase in the size of the power tool must be avoided.

Also, in the power tool using a brushless motor disclosed in the above-cited patent reference 1 or 2, in order to improve the heat releasing performance of the power substrate for controlling the rotation of the brushless motor, there is employed a structure in which the power substrate is disposed backwardly of the motor shaft serving as the air flow passage of the cooling fan for the motor windings or in the rear portion of the motor. Therefore, the provision of the power substrate backwardly of the motor shaft or in the rear portion of the motor extends the whole length of the power tool by an amount equivalent to such provision of the power substrate to thereby increase the size of the power tool, which consequently worsens the easy-to-use characteristic of the power tool in the above-mentioned narrow operation site and the like.

Further, to drive the brushless motor, there are necessary a power substrate and a control substrate; and, in the power substrate, there are mainly arranged power wires from a battery power supply and lead wires to the brushless motor. Since heavy currents flow in the respective power and lead wires, the wires are formed thick and they are connected directly to each other using pug terminals or the like, which makes it necessary to secure a large connecting space. Therefore, normally, the wiring space is provided in such a portion as can have no ill influences on the appearance of the power tool, for example, in the periphery of the battery power supply. However, in this case, since the lead wires are long, the assembling efficiency of the wires is worsened and the voltages of the wires are caused to drop.

Here, in the power tool disclosed in the patent reference 1 or 2, a motor shaft and an output shaft such as a drill bit are arranged on the same axis. On the other hand, when the motor shaft and output shaft are arranged in such a manner that they are shifted from each other in two upper and lower stages, the output shaft is higher than the motor shaft, or when a brushless motor is employed, the whole length of the power tool is short and a dead space is generated within a housing.

### Disclosure of Invention:

According to one or more embodiments of the invention, there is provided a power tool with a brushless motor which, by making efficient use of a dead space provided due to the structural characteristic of the power tool, without increasing the size of the whole of the power tool, can prevent a rotation controlling electronic part included in a power substrate from being overheated and also can effectively realize the enhanced assembling efficiency of the wiring and the prevention of the voltage drop of the lead wires.

According to a first aspect of the invention, a power tool is structured such that, a drive portion for driving an output shaft, an electric motor disposed backwardly of the drive portion so as to be operated in linking with the drive portion and including a motor shaft offset positioned downwardly of the output shaft, and a grip disposed on the lower portion of the electric motor are arranged within an integrally formed housing, and, by operating a trigger lever provided on the grip, power is supplied from a battery power supply to the electric motor to thereby drive the power tool, wherein the electric motor is made of a brushless motor, a space formed upwardly of the brushless motor equivalently to the difference between the height of the brushless motor and the whole height of the power tool is used as a first space, a space formed backwardly of the brushless motor equivalently to the difference between the length of the brushless motor and the whole length of the power tool is used as a second space, in the first space, there is arranged a power substrate including an electronic part for controlling the rotation of the brushless motor and, in the second space, there is arranged the heat releasing portion of a heat sink for cooling the power substrate.

According to a second aspect of the invention, in the first space, instead of the power substrate, there are arranged the connecting terminals of power wires for connecting together the power substrate and a battery power supply and lead wires for connecting together the power substrate and the brushless motor.

According to a third aspect of the invention, in the first space, there may also be arranged: the connecting terminals of power wires for connecting together the power substrate and a battery power supply and lead wires for connecting together the power substrate and the brushless motor; and, a power stabilizing electrolytic condenser.

According to the above first aspect, since, downwardly of the output shaft, the motor shaft of the electric motor is offset disposed, upwardly of the brushless motor, there is formed a first space equivalent to the difference between the height of the brushless motor and the whole height of the power tool, and also, backwardly of the brushless motor, there is formed a second space equivalent to the length of the brushless motor and the whole length of the power tool. Since a brushless motor is incorporated into a power tool structured such that the output shaft and motor shaft are offset arranged, when compared with a power tool incorporating therein a brush motor, the above-mentioned first and second spaces can be reduced or omitted. However, even when the first and second spaces are removed, the working efficiency and operation efficiency of the power tool cannot be enhanced specially. Rather than this, by making use of the above-mentioned structural characteristic, in the first space, there is arranged a power substrate including an electronic part for controlling the rotation of the brushless motor and, in the second space, there is arranged a heat sink. Owing to this, the power substrate and heat releasing heat sink, which are respectively necessary for the brushless motor, can be stored in the range of the size of a power tool with a brush motor incorporated therein and thus the overheating of the rotation controlling electronic part included in the power substrate can be prevented effectively.

Also, when cooling a brush motor, generally, the cooling air is taken in from the rear portion of a brush motor storing housing and is discharged from the front portion thereof. For a brushless motor as well, by employing the same structure, the power substrate can be cooled through a heat releasing heat sink.

According to the above second aspect, since, in the first space, there are arranged the connecting terminals of power wires for connecting together the power substrate and a battery power supply and lead wires for connecting together the power substrate and the brushless motor, the wiring is arranged near to the brushless motor and power substrate, whereby the lead wires can be shortened and thus the slackening thereof can be reduced. This can reduce a wiring mistake such as the biting of the lead wires by the housing. Also, the assembling steps of holding the wiring can be reduced and thus the efficiency of the assembling operation can be enhanced. Further, voltage drop or heat generation due to the wiring can be controlled to a minimum.

According to the above third aspect, further, since the electrolytic condenser can be arranged too, the effect provided by the above second aspect can be enhanced further.

Other aspects and advantages of the invention will be apparent from the following description, the drawings and the claims.

### Brief Description of Drawings:

[Fig. 1] Fig. 1 is a perspective view of a hammer drill used as a power tool according to a first exemplary embodiment of the invention, while a portion of a housing portion is removed therefrom in order to show the main structure portions of the hammer drill.
[Fig. 2] Fig. 2 is an exploded perspective view of a power substrate and a heat sink.
[Fig. 3] Fig. 3 is a perspective view of a hammer drill according to a second exemplary embodiment of the invention, showing a state where the main portions thereof are exposed.
[Fig. 4] Fig. 4 is a perspective view of a power substrate/heat sing unit incorporated in the hammer drill according to the second exemplary embodiment.
[Fig. 5] Fig. 5 is a side view of a hammer drill according to a third exemplary embodiment of the invention, showing a state where the main portions thereof are exposed.
[Fig. 6] Fig. 6 is a side view of a hammer drill with a brushless motor incorporated therein, showing a state where the main portions thereof are exposed.
[Fig. 7] Fig. 7 is a perspective view of the hammer drill shown in Fig. 6.

### [Description of Reference Numerals and Signs]

- A:: Hammer drill
- 1:: Housing
- 2:: Power substrate
- 31:: FET
- 4:: Heat sink
- 42:: Heat releasing portion

### Best Mode for Carrying Out the Invention:

Now, description will be given below of exemplary embodiments of the invention with reference to the accompanying drawings.

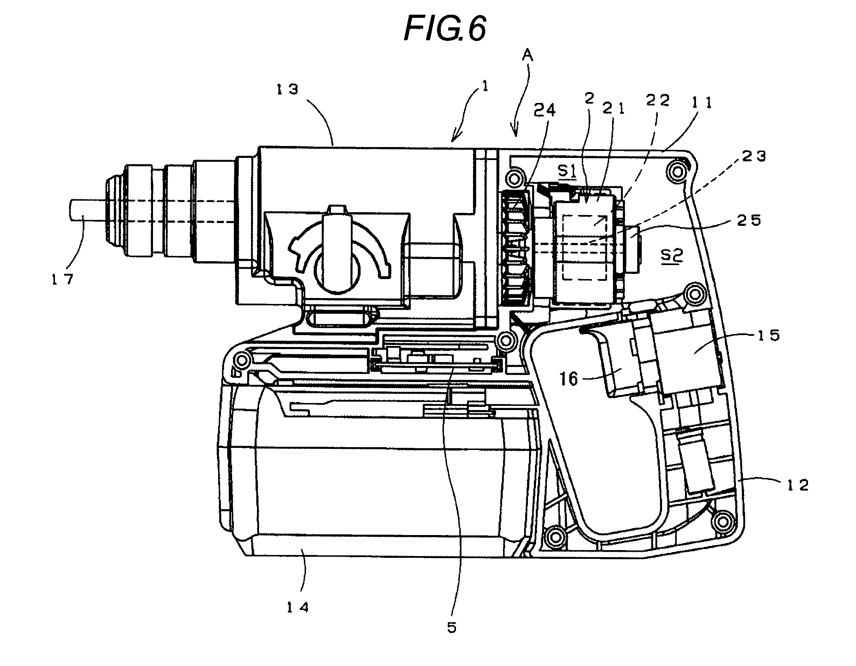

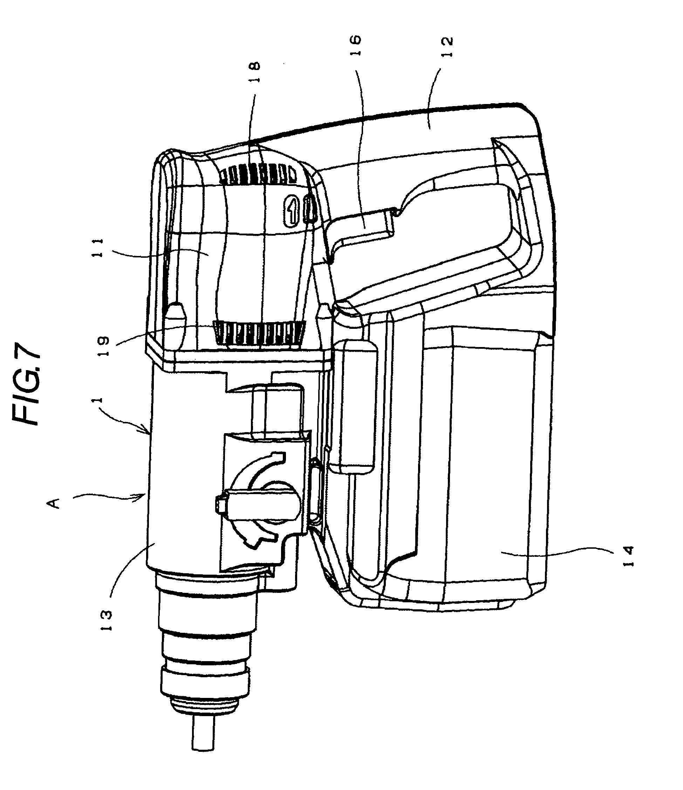

In Figs. 6 and 7, there is shown a hammer drill A which is a power tool according to the exemplary embodiments of the invention and incorporates a brushless motor 2 therein. The hammer drill A includes a housing 1. The housing 1 includes a motor housing portion 11, a grip 12 formed integrally with the housing portion 11, a storage housing portion 13 for storing a rotation drive portion connected to the front portion of the motor housing portion 11, and the like. Also, on the lower portion of the housing 1, there is provided a DC battery power pack 14 which is used to supply DC power.

In the motor housing portion 11, there is incorporated a brushless motor 2; the grip 12 includes a trigger lever 16 which can be operated by manually gripping the grip portion 12; and, by pressing the trigger lever 16, the starting switch 15 of the brushless motor 2 can be operated.

The brushless motor 2 includes, as the main structure parts thereof, a stator 21, a rotor 22, a motor shaft 23 formed integrally with the rotor 22, and a cooling fan 24 mounted on the front side of the motor shaft 23. The front and rear ends of the motor shaft 23 are bearing supported by bearings 25, whereby the motor shaft 23 can be rotated with respect to the stator 21 together with the rotation of the rotor 22.

Here, as shown in Fig. 7, in the two sides of the rear portion of the motor housing portion 11 and in the two sides of the front portion of the motor housing 11, there are formed suction holes 18 and discharge holes 19 respectively; and in the inside of the motor housing portion 11, there is formed a cooling air course which starts from the rear portion suction hole 18, extends through between the stator 21 and rotor 22, and arrives at the front portion discharge hole 19.

In the above-structured hammer drill A, when the trigger lever 16 is pulled and operated, the starting switch 15 is turned on to operate or rotate the brushless motor 2, the rotation of the brushless motor 2 is reduced by a reducing portion (not shown) and is then transmitted to a bit chuck (not shown) serving as a rotation driving transmission portion, and thus an output shaft (drill bit) 17 is rotated, thereby carrying out a given drilling operation.

Here, as described above, in the multi-stage shaft structure in which the motor shaft 23 can be formed lower than the height of the output shaft 17 of the rotation drive portion and incorporates therein the brushless motor 2 smaller in size than a brush motor, upwardly of the brushless motor 2, between the stator 21 of the brushless motor 2 and motor housing 11, there is formed a space equivalent to the difference between the total height of the structure and the height of the brushless motor 2.

Similarly, although the whole length of the power tool is the length from the leading end of the rotation drive portion to the rear end of the grip 12, since the brushless motor 2 is structured such that it has not a brush as in the conventional motor, backwardly of the brushless motor 2, there is formed an extra space equivalent to the brush.

As shown in Fig. 6, when a space S1 existing upwardly of the above-mentioned brushless motor 2 is expressed as a first space and a space backwardly thereof is expressed as a second space, since the first space S1 and second space S2 are the spaces that can be omitted, by removing these spaces, the whole size of the power tool A can be reduced accordingly. However, even when these spaces are removed, the working efficiency of an operator in a narrow working site cannot be improved, nor, especially, can be improved the operation efficiency of the power tool. In other words, since the working efficiency and operation efficiency depend on the whole height and whole length of the power tool, such space saving as cannot reduce the whole height and whole length of the power tool can provide little advantage. Therefore, in the range that does not increase the size of the power tool, the spaces S1 and S2 can be used effectively. Next, description will be given below of exemplary embodiments according to the invention on the assumption that the hammer drill has the above structure.

### [First Exemplary Embodiment]

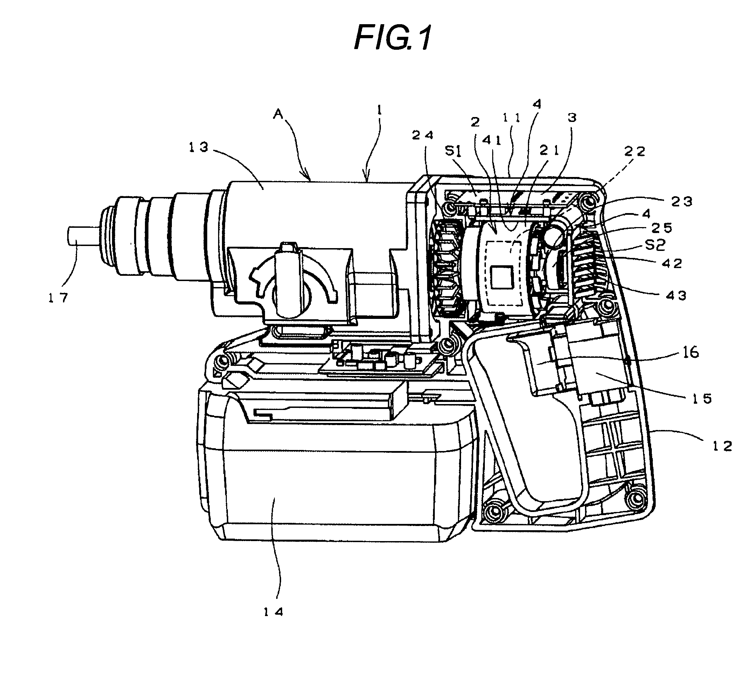

In Fig. 1, in the first space S1, there were provided a power substrate 3 for controlling the rotation of a brushless motor 2 and the heat sink main body 41 of a heat sink 4 for cooling the power substrate 3; and, in the second space S2, there is provided a heat releasing portion 42.

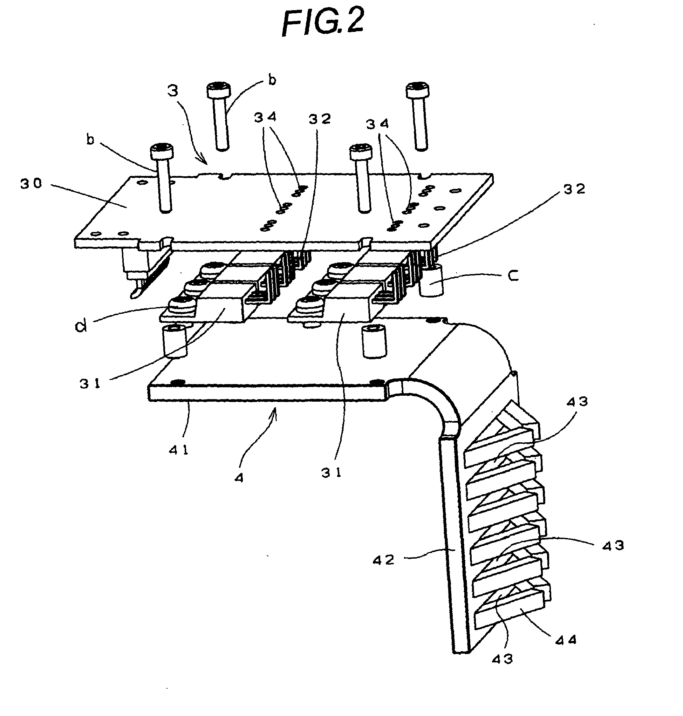

That is, as shown in Fig. 2, on the substrate portion 30 of the power substrate 30 that is made of insulating material, there are mounted integrally therewith six pieces of FETs 31 so as to correspond to three-phase windings (not shown) arranged on a stator (21). The FETs 31 are electronic parts for controlling the rotation of the brushless motor, and they are arranged in two lines in a direction perpendicular to the longitudinal direction of the substrate portion 30 of the power substrate 3, three FETs 31 in each line.

Each of the FETs 31 includes three electrodes, while the leg portions 32 of these electrodes are inserted into their associated rectangular-shaped holes 34 which are respectively formed in the substrate portion 30 of the power substrate 3. The leg portions 32 are soldered to the substrate portion 30 in such a manner that the leading ends thereof project slightly from the upper surface of the substrate portion 30. And, the lower portions (in Fig. 2) of the FETs 31 are fixed by four bolts b which are fixed to the heat sink main body 41 (which will be discussed later), are held between the substrate portion 30 and heat sink main body 41, and are positioned by their associated four spacers c. The power substrate 3 is properly fixed to such portion of the first space S1 as existing inside the upper portion of the motor housing 11. The leading ends of the three electrodes of each EET 31 slightly projecting from the upper surface of the substrate portion 30 of the power substrate 3 respectively form connecting electrodes to be connected to the windings of the DC power supply, control substrate (gate control circuit) 5 (see Fig. 6) and brushless motor 2.

Next, the heat sink 4 is made of aluminum or copper which is good in heat conduction. And, the heat sink 4 includes a substantially rectangular-shaped heat sink main body 41 contacted with the FETs 31 in such a manner that it covers the lower portions of the FETs 31, and a heat releasing portion 42 which extends from one end of the heat sink main body 41 such that it curves almost at right angles thereto and also which has multiple ventilation holes 43. And, the heat sink main body 41 is provided in the first space S1, while the heat releasing portion 42 is provided in the second space S2.

In the heat releasing portion 42 of the heat sink 4, between cut raised pieces 44 respectively formed by cutting and raising the heat releasing portion 42, there are formed the ventilation holes 43. The ventilation holes 43 are arranged such that they face cooling air suction holes 18 respectively formed on the two right and left sides of the rear portion of the motor housing 11. The cooling air, which is taken in from the suction holes 18 into the motor housing 11, is allowed to flow through the ventilation holes 43 and then through the cooling air passage to thereby cool the brushless motor 2 and, after then, it is discharged from the discharge holes 19 to the outside.

According to the above structure, since the cooling fan 24 rotates simultaneously with the rotation of the brushless motor 2, the cooling air (the open air) is taken from the suction holes 18 into the motor housing portion 11, the cooling air flows through the ventilation holes 43 of the heat releasing plate to thereby cool the brushless motor 2 and, after then, the cooling air is discharged from the discharge holes 19 formed on the two sides of the front portion of the motor housing portion 11. In this case, since the heat releasing portion 42 of the heat sink 4 is also cooled simultaneously when the brushless motor 2 is cooled, due to the conduction of heat thereof, the heat sink main body 41 is cooled and the power substrate 3 is cooled too. Therefore, although the power substrate 3 and FETs 31 generate heat together with the brushless motor 2 due to the continuous operation of the hammer drill, since the FETs 31 are mounted such that it is contacted with the heat sink main body 41, an increase in the temperature due to the heat generation of the power substrate 3 and FETs 31 can be restricted.

As described above, since, downwardly of the output shaft 17, the motor shaft 23 of the brushless motor 2 is arranged such that it is offset with respect to the output shaft 17 in the vertical direction, upwardly of the brushless motor 2, there is formed the first space S1 equivalent to the difference between the height of the brushless motor 2 and the whole height of the hammer drill and also, backwardly of the brushless motor 2, there is formed the second space S2 equivalent to the difference between the length thereof and the whole length of the hammer drill. Thus, using the structural characteristic of the present hammer drill, in the first space S1, there is arranged the power substrate 3 including the rotation controlling electronic part of the brushless motor and, in the second space S2, there is arranged the heat releasing portion 42 of the heat sink 4. The power substrate 3 and heat radiating heat sink 4 necessary for the brushless motor 2 can be stored in the range of the size of a power tool including a brush motor.

Also, owing to the heat sink 4 disposed in the second pace S2, the efficient use of the cooling air for cooling the brushless motor 2 can cool the power substrate 3 effectively. Therefore, by using the spaces S1 and S2 without increasing the size of the hammer drill, the power substrate 3 including the FETs 31 can be effectively prevented from being overheated.

Here, the power wires for connecting together the power substrate and battery power supply as well as the lead wires for connecting together the power substrate and brushless motor may be arranged in the vicinity of the control substrate 5.

### (Second Exemplary Embodiment)

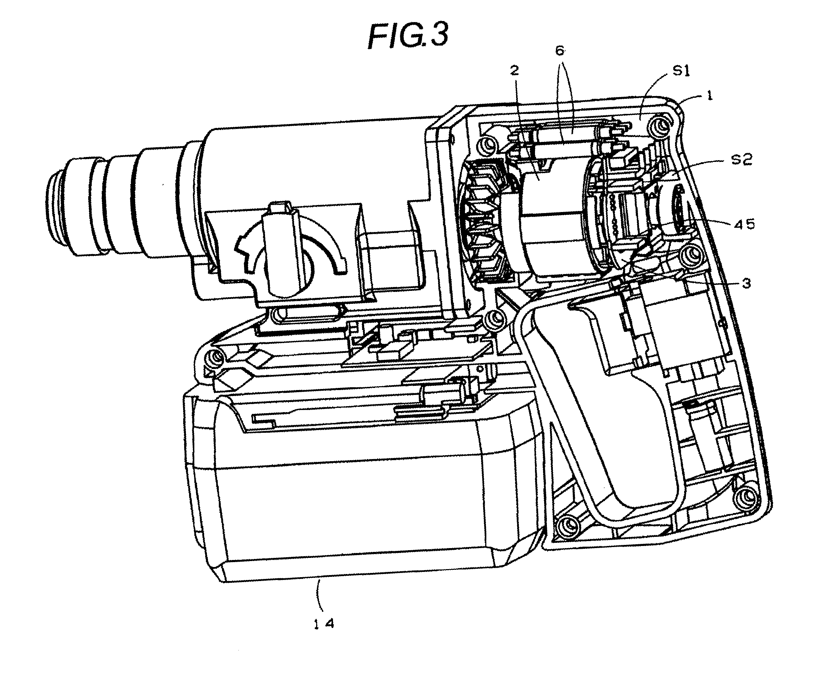

In Fig. 3, in the first space S1, there are arranged the connecting terminals (plug terminals) 6 of power wires for connecting together the power substrate 3 and a battery power supply included in a DC battery power pack 14 and lead wires for connecting together the power substrate 3 and the brushless motor 2. The lower (in Fig. 3) stages of the plug terminals 6 are the terminals of the power wires to be connected to the battery power supply, whereas the upper (in Fig. 3) stages thereof are the terminals of the lead wires to be connected to the power substrate 3 and brushless motor 2.

On the power substrate 3 necessary to drive the brushless motor 2, mainly, there are arranged the power wires from the battery power supply and the lead wires to the brushless motor 2. Since these wires respectively allow a large current to flow therein, they are formed thick and these wires are connected together directly using the plug terminals 6 and the like, which makes it necessary to secure a large space for them. However, the first space S1 provides a sufficiently large space for the above connection of the wires.

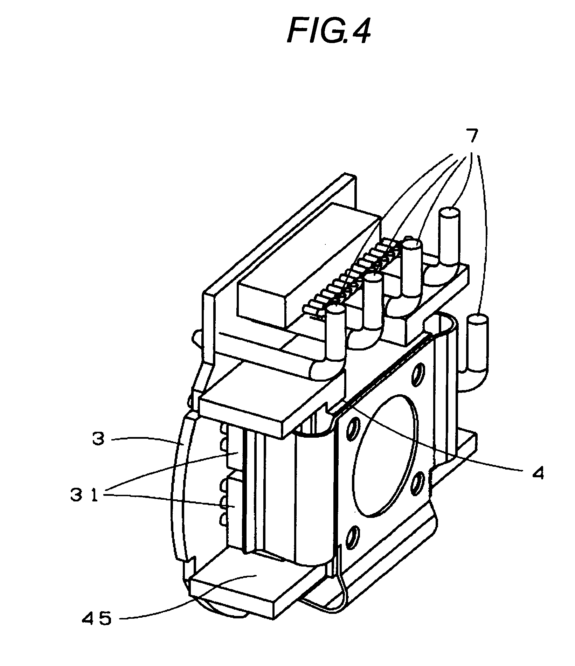

Next, between the brushless motor 2 and bearing 25 in the second space 2, as shown in Fig. 4, there are interposed the power substrate 3, FETs 31 and heat sink 4. Upper and lower heat releasing plates 45, which serve as the heat releasing portion, are respectively provided on and projected from the upper and lower portions of the heat sink 4, while the heat releasing plates 45 are arranged on the flow passage of the cooling air. The FETs 31 are held by and between the upper and lower heat releasing plates 45; and, the power substrate 3 is arranged on the flow passage and is also contacted with the end face of the heat sink 4. Reference numeral 7 designates lead wires and power wires which are connected to the right (in Fig. 4) ends of the plug terminals 6.

According to the above structure, since, in the first space S1, there are arranged the connecting terminals 6 of the power wires for connecting together the power substrate 3 and the battery power supply and the lead wires for connecting together the power substrate 3 and the brushless motor 2, the wirings exist near to the brushless motor and power substrate, thereby being able to shorten the lead wires. This can reduce the slackening of the lead wires and thus can reduce a wiring mistake such as the biting of the lead wires by the housing 1. Also, the number of assembling steps for holding the wiring can be reduced to thereby be able to enhance the assembling efficiency. Further, voltage drop or heat generation due to the wiring can be minimized.

Also, since the heat releasing plates 45 within the second space S2 can be directly contacted with the cooling air, the heat releasing effect thereof is high, which can prevent an increase in the temperature due to the generation of heat by the power substrate 3 and FETs 31.

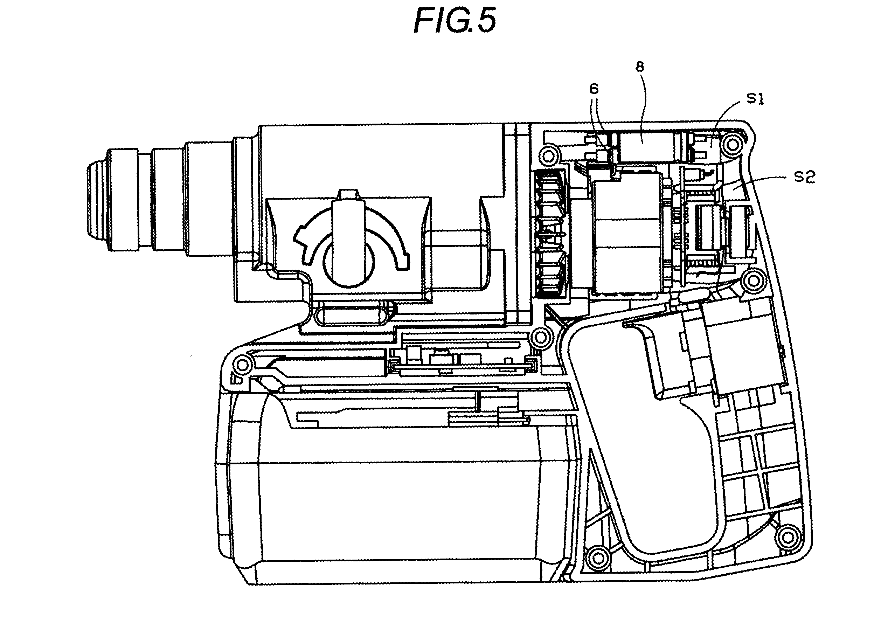

Here, there may also be employed a structure in which, in the first space S1, as shown in Fig. 5, there are arranged: the connecting terminals 6 of the power wires for connecting together the power substrate 3 and battery power supply and the lead wires for connecting together the power substrate 3 and brushless motor 2; and, an electrolytic condenser 8 for stabilizing the power supply (a third exemplary embodiment).

Although the present invention has been described heretofore in detail or with reference to the specific embodiments thereof, it is obvious to those skilled in the art that various changes and modifications are also possible without departing from the spirit and scope of the invention.

The present application is based on the Japanese Patent Application (Application No. 2007-009101) filed on Jan. 18, 2007 and thus the contents thereof are incorporated herein by reference.

### Industrial Applicability:

The present invention can be applied to a power tool such as a hammer drill and an impact driver.

## Claims

1. A power tool comprising:
an output shaft;
a brushless motor including a motor shaft offset positioned downwardly of the output shaft;
a grip disposed downwardly of the brushless motor;
a housing for storing the output shaft, the brushless motor and the grip therein;
a first space formed upwardly of the brushless motor;
a second space formed backwardly of the brushless motor;
a power substrate disposed in the first space and including an electronic part for controlling a rotation of the brushless motor; and
a heat releasing portion of a heat sink disposed in the second space for cooling the power substrate.

2. The power tool according to Claim 1, wherein the first space is formed between an upper end of the brushless motor and an upper end of the housing, and
the second space is formed between an rear end of the brushless motor and an rear end of the housing.

3. The power tool according to Claim 1, wherein the heat sink comprises a heat sink main body disposed in the first space and the heat releasing portion bent from the heat sink main body and disposed in the second space,
the rotation controlling electronic part includes FETs, and
the FETs is in contact with the heat sink main body.

4. The power tool according to Claim 1, wherein connecting terminals of power wires for connecting together the power substrate and a battery power supply and of lead wires for connecting together the power substrate and the brushless motor and a power stabilizing electrolytic condenser are arranged in the first space.

5. A power tool comprising:
an output shaft;
a brushless motor including a motor shaft offset positioned downwardly of the output shaft;
a grip disposed downwardly of the brushless motor;
a housing for storing the output shaft, the brushless motor and the grip therein;
a first space formed upwardly of the brushless motor;
a second space formed backwardly of the brushless motor;
a power substrate comprising an electronic part for controlling the rotation of the brushless motor;
the connecting terminals of power wires for connecting together the power substrate and a battery power supply and of lead wires for connecting together the power substrate and the brushless motor, the connecting terminals being arranged in the first space; and
a heat sink disposed in the second space for cooling the power substrate.

6. The power tool according to Claim 5, wherein the first space is formed between an upper end of the brushless motor and an upper end of the housing, and
the second space is formed between a rear end of the brushless motor and a rear end of the housing.
